Europäisches Patentamt

European Patent Office

Office européen des brevets

(11) Numéro de publication: **0 354 830**
A1

# (12) DEMANDE DE BREVET EUROPEEN

(21) Numéro de dépôt: 89402148.4

(22) Date de dépôt: 28.07.89

(51) Int. Cl.5: **B 64 F 1/32**
B 65 G 69/24

(30) Priorité: 09.08.88 FR 8810745

(43) Date de publication de la demande:
**14.02.90 Bulletin 90/07**

(84) Etats contractants désignés:
AT BE CH DE ES GB GR IT LI LU NL SE

(71) Demandeur: **SOVAM INDUSTRIES**
**Route de Moncoutant**
**Parthenay ( Deux Sèvres ) (FR)**

(72) Inventeur: **Rateau, André**
**14, rue du Bois**
**Saint Aubin Le Cloud (Deux Sèvres) (FR)**

**Gautreau, Michel**
**4, rue des Vergnes**
**Le Tallud (Deux Sèvres) (FR)**

**Ruellou Yves**
**13, rue des Vaux**
**Parthenay (Deux Sèvres) (FR)**

(74) Mandataire: **Cabinet Pierre HERRBURGER**
**115, Boulevard Haussmann**
**F-75008 Paris (FR)**

(54) **Dispositif détecteur de niveau et notamment un véhicule pour le chargement ou le déchargement de produits particulièrement dans les avions.**

(57) Ce dispositif comporte une plate-forme (4) mobile verticalement sous l'action d'un organe de puissance (13) associé à un moyen de commande (14), cette plate-forme étant reliée à l'une des extrémités (3) d'un tube (1) au moins partiellement souple contenant un liquide (2) et dont l'autre extrémité (6) est pourvue d'un moyen (7) pour son accrochage à la carlingue de l'avion 8), dispositif caractérisé en ce qu'un moyen (16) de détection de pression est associé à ce tube pour détecter la pression ou la dépression (20, 28) du liquide dans le tube, ou leurs variations, ce moyen étant relié au moyen de commande (14) de l'organe de puissance (13) afin d'asservir le niveau de la plate-forme (4) à un niveau de référence tel que le du plancher (9) de l'avion.

FIG 1

EP 0 354 830 A1

Bundesdruckerei Berlin

## Description

## Dispositif détecteur de niveau et notamment un véhicule pour le chargement ou le déchargement de produits particulièrement dans les avions.-

L'invention concerne un dispositif détecteur de niveau et notamment un véhicule pour le chargement ou le déchargement de produits particulièrement dans les avions.

Si l'on se reporte plus particulièrement aux véhicules pour le chargement des avions, ceux-ci comportent une plate-forme qui est supportée de manière mobile verticalement par rapport à un châssis, par l'intermédiaire de bras articulés, actionnés par des vérins hydrauliques associés à leur moyen de commande.

Lors du chargement d'un avion la plate-forme est amenée au niveau du plancher de l'avion afin de faciliter son chargement ou son déchargement. Cependant, au fur et à mesure du chargement ou du déchargement le niveau de l'avion par rapport au sol varie et il est donc nécessaire de prévoir, sur le véhicule, des moyens qui assurent la commande des vérins hydrauliques afin de régler automatiquement le niveau de la plate-forme en fonction des variations de niveau du plancher de l'avion.

Ces moyens sont réalisés jusqu'à présent par des ensembles complexes fragiles et peu précis. Ils sont fixés sur la plate-forme et viennent mécaniquement en appui sur le plancher de l'avion afin de déclencher des contacteurs électriques ou autres qui agissent sur les organes de commande du ou des vérins hydrauliques.

La présente invention a pour but de remédier aux inconvénients de ces dispositifs connus et concerne à cet effet un dispositif détecteur de niveau et notamment un véhicule pour le chargement ou le déchargement de produits dans les avions, dispositif comportant une plate-forme mobile verticalement sous l'action d'un organe de puissance associé à un moyen de commande, cette plate-forme étant reliée à l'une des extrémités d'un tube au moins partiellement souple contenant un liquide et dont l'autre extrémité est pourvue d'un moyen pour son accrochage à la carlingue de l'avion, dispositif caractérisé en ce qu'un moyen de détection de pression est associé à ce tube pour détecter la pression ou la dépression du liquide dans le tube, ou leurs variations, ce moyen étant relié au moyen de commande de l'organe de puissance afin d'asservir le niveau de la plate-forme à un niveau de référence tel que le plancher de l'avion.

L'invention est représentée à titre d'exemple non limitatif sur les dessins ci-joints, dans lesquels :

- la figure 1 est une vue latérale schématique d'un mode de réalisation du dispositif conforme à l'invention et d'un avion au cours d'une opération de chargement ou de déchargement,

- les figures 2, 3 et 4 représentent schématiquement trois autres modes de réalisation du dispositif de la figure 1.

La présente invention a, en conséquence, pour but la réalisation d'un dispositif détecteur de niveau et notamment d'un véhicule destiné à être utilisé par exemple sur les aéroports afin d'effectuer des opérations de chargement et de déchargement des avions, ce dispositif comportant des moyens de construction simple et peu coûteux et d'un fonctionnement fiable et précis, qui assurent une mise à niveau automatique de la plate-forme du véhicule et du plancher de l'avion.

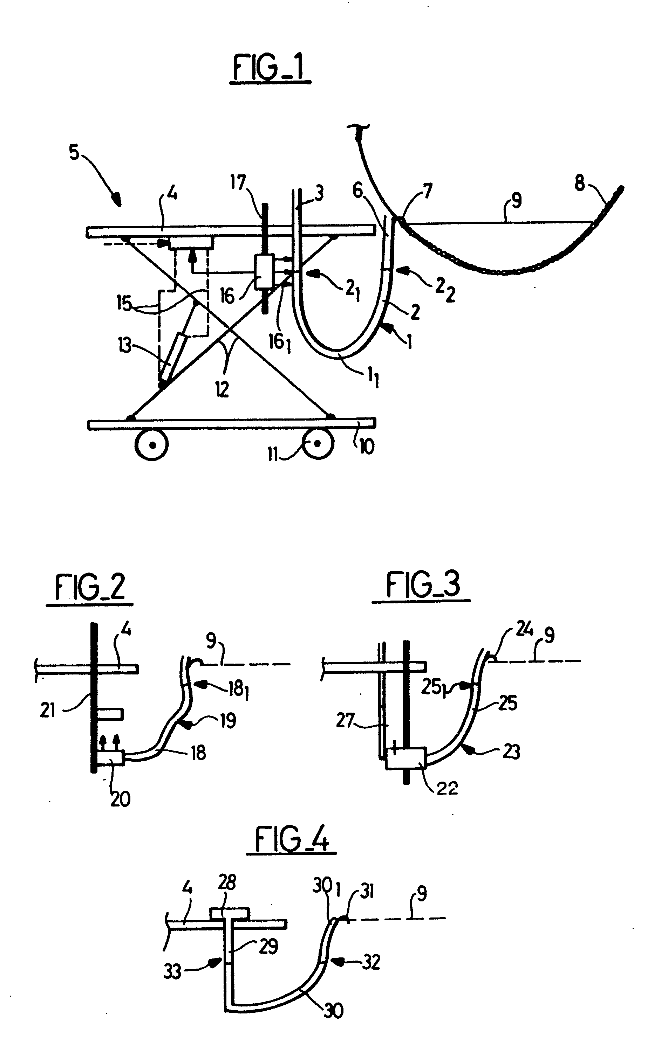

Ce dispositif consiste, d'une manière générale, à mettre en oeuvre (voir figure 1) un tube 1 qui est au moins partiellement souple et qui contient un liquide 2. Ce tube est fixé par l'une de ses extrémités 3 à la plate-forme 4 du véhicule 5 alors que l'autre extrémité 6 de ce tube est pourvue d'un moyen d'accrochage 7 destiné à assurer l'accrochage de cette extrémité 6 du tube en un point quelconque de la carlingue 8 de l'avion et, de préférence, en un point situé à hauteur du plancher de chargement 9 de cet avion.

Ce véhicule 5 qui est de préférence un véhicule auto-moteur comporte un châssis 10 monté sur des roues 11, la plate-forme 4 étant mobile verticalement par rapport au châssis 10 par l'intermédiaire de bras de levier 12 disposés en ciseaux et actionnés par un ou plusieurs vérins hydrauliques 13 associés à leur distributeur de commande 14 par des canalisations 15.

On comprend que lors des opérations de chargement ou de déchargement de l'avion, la distance du plancher de chargement 9 par rapport au sol varie en fonction des réactions de la suspension, ce qui se traduit par un abaissement ou un soulèvement correspondant de l'extrémité 6 du tube 1. L'extrémité 3 du tube étant fixée sur la plate-forme 4 que l'on considère immobile, ce déplacement de l'extrémité 6 du tube se traduit par le déplacement de la boucle inférieure $1_1$ pendante de ce tube et donc par un déplacement inverse des niveaux $2_1$ et $2_2$ du liquide dans ce tube, l'amplitude identique de ces déplacements inver ses étant égale à la moitié de l'amplitude du déplacement de l'extrémité 6. Ces niveaux $2_1$ et $2_2$ restent bien entendu identiques l'un par rapport à l'autre en raison du principe des vases communiquants.

Pour détecter la variation des niveaux de la carlingue 8 par rapport au sol il suffit donc de détecter la variation du niveau $2_2$ du liquide à proximité de l'extrémité 6 du tube et d'agir par un dispositif d'asservissement sur la plate-forme 4 pour soulever ou abaisser l'extrémité 3 du tube et ramener le niveau $2_2$ du liquide dans sa position initiale à proximité de l'extrémité 6 du tube.

Cette détection du niveau pourra s'effectuer, bien entendu, soit par le repérage de ce niveau proprement dit, soit par la mesure corrélative de la pression ou de la dépression de la colonne d'eau aboutissant à ce niveau $2_2$.

Dans l'exemple de réalisation de la figure 1 le tube 1 est ouvert a ses deux extrémités et la détection du niveau $2_2$ du liquide à proximité de l'extrémité 6 du tube 1 s'effectue en repérant le niveau identique $2_1$ de ce liquide à proximité de l'extrémité 3 de ce tube.

A cet effet la plate-forme 4 comporte un détecteur 16 pourvu de moyens de détection 16 de nature quelconque et, par exemple, de nature optique ou magnétique adaptés à la nature du liquide 2 utilisé dans le tube 1.

Ces moyens de détection 16 sont de préférence au moins au nombre de trois situés l'un au-dessus de l'autre afin que les moyens de détection supérieur et inférieur commandent respectivement le soulèvement et l'abaissement de la plate-forme 4, alors que le moyen de détection intermédiaire commande l'immobilisation de la plate-forme 4 qui se trouve alors au niveau du plancher 9.

Ce détecteur 16 est relié au moyen de commande 14 du vérin 13, afin d'assurer les mouvements correspondants de la plate-forme.

On comprend que dans cette disposition, qui permet un asservissement automatique du niveau de la plate-forme 4 à celui du plancher 9, le résultat est lié au niveau du point d'accrochage du crochet 7 sur la carlingue de l'avion 8 par rapport au niveau du plancher 9.

Afin de tenir compte de cette différence éventuelle de niveau, le détecteur 16 et/ou l'extrémité 3 du tube 1 sont fixés de manière réglable, par exemple, sur une colonne telle que 17.

Cette colonne 17 pourra être repérée en fonction du type des divers avions afin de tenir compte, avant toute opération de chargement ou de déchargement, de la différence de niveau existant entre le point d'accrochage du crochet 7 sur la carlingue d'un avion déterminé 8 et le plancher 9.

Suivant le mode de réalisation de la figure 2, la variation du niveau $18_1$ du liquide 18 contenu dans le tube souple 19 est obtenue par une mesure de pression par un détecteur ou capteur 20 fixé de manière réglable par une colonne graduée 21 sur la plate-forme 4 du véhicule.

Dans ce cas, également, les variations du niveau du plancher 9 de l'avion, auquel est suspendu ce tube 19 par le crochet 7, se traduisent par une variation sensiblement identique de hauteur du niveau $18_1$ du liquide par rapport au détecteur 20. Ce dernier détecte donc une variation de pression qui permet l'obtention de signaux agissant sur le moyen de commande du niveau de la plate-forme 4 pour ramener le niveau $18_1$ du liquide à sa valeur initiale dans le tube.

Dans l'exemple de la figure 3 on a représenté une réalisation mettant en oeuvre un capteur différentiel de pression. Dans ce cas le capteur différentiel 22 est relié par une de ses entrées au tube souple 23, dont l'extrémité libre ouverte est pourvue d'un crochet 24 d'accrochage sur la carlingue de l'avion. Ce tube 23 contient un liquide 25 jusqu'à un niveau $25_1$.

Ce détecteur différentiel 22 est fixé de manière réglable sur la plate-forme 4 par la colonne 26 et sa seconde entrée est reliée à un second tube 27, qui occupe une position fixe par rapport au détecteur 22 et donc par rapport à la plate-forme 4. Ce tube 27 qui est ouvert à son extrémité libre contient, également, un liquide qui se trouve donc à la pression atmosphérique ambiante et qui détermine une valeur de pression de référence. Cette valeur est comparée en permanence par le détecteur 22 à la pression du liquide 25 dans le tube 23, c'est-à-dire en fait au niveau du plancher 9 par rapport au sol.

Dans l'exemple de réalisation de la figure 4 le détecteur mis en oeuvre est un détecteur de dépression 28 qui est fixé à l'extrémité supérieure d'un tube rigide 29 pendant sous la plate-forme 4 du véhicule. L'extrémité inférieure libre de ce tube 29 est raccordée à un tube souple 30 dont l'extrémité libre $30_1$ est elle-même fermée de manière étanche et comporte le crochet 31 permettant l'accrochage de cette extrémité $30_1$ sur l'avion que l'on désire charger ou décharger. Les deux tubes communiquants 29 et 30 contiennent, sous vide, un liquide.

On constate également que dans cette disposition toute variation du niveau du plancher 9 se traduit par une modification du niveau 32 du liquide dans le tube 30 d'où une variation inverse corrélative du niveau 33 de ce liquide dans le tube 29. Cette variation de niveau se traduit par une variation de dépression au-dessus de ce liquide, variation de dépression qui est mesurée par le détecteur 28 afin d'agir sur l'organe de commande de la plate-forme 4 pour asservir sa position à celle du plancher 9 et ramener le niveau 33 du liquide à sa valeur initiale.

**Revendications**

1°) Dispositif détecteur de niveau et notamment véhicule pour le chargement ou le déchargement de produits dans les avions, dispositif comportant une plate-forme (4) mobile verticalement sous l'action d'un organe de puissance (13) associé à un moyen de commande (14), cette plate-forme étant reliée à l'une des extrémités (3) d'un tube (1) au moins partiellement souple contenant un liquide (2) et dont l'autre extrémité (6) est pourvue d'un moyen (7) pour son accrochage à la carlingue de l'avion (8), dispositif caractérisé en ce qu'un moyen (16) de détection de pression est associé à ce tube pour détecter la pression ou la dépression (20, 28) du liquide dans le tube, ou leurs variations, ce moyen étant relié au moyen de commande (14) de l'organe de puissance (13) afin d'asservir le niveau de la plate-forme (4) à un niveau de référence tel que le plancher (9) de l'avion.

2°) Dispositif conforme à la revendication 1, caractérisé en ce que le moyen de détection de pression ou dépression est fixé sur la plate-forme (4) et est relié à l'une des extrémités du tube souple (19) afin de détecter la pression de la colonne de liquide du tube accroché par ailleurs à la carlingue de l'avion.

3°) Dispositif conforme à la revendication 2, caractérisé en ce que le moyen de détection (22) est un moyen de détection de pression différentielle et est relié, d'une part, à l'une des extrémités du tube (23) pourvu du moyen d'accrochage (24) et, d'autre part, à un tube contenant un liquide (27) et occupant une position fixe par rapport à la plate-forme.

4°) Dispositif conforme à l'une quelconque des revendications 1 et 3, caractérisé en ce que le moyen de détection est un moyen (28) de détection de la pression et est fixé à l'extrémité d'un tube (30) dont l'autre extrémité ($30_1$) est fermée, ce tube contenant, sous vide, un liquide.

# FIG_1

# FIG_2

# FIG_3

# FIG_4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 662 809 (STURTZ)<br>* Colonne 4, lignes 61-68 *<br>--- | 1,2 | B 64 F 1/32<br>B 65 G 69/24 |
| Y | FR-A-2 588 074 (FACOM)<br>* Résumé; page 1, lignes 17-27 * | 1,2 | |
| A | <br>--- | 4,5 | |
| A | US-A-4 397 099 (E. GAUCHER)<br>* Colonne 3, lignes 18-40 *<br>----- | 6 | |

**DOMAINES TECHNIQUES RECHERCHES (Int. Cl.5)**

B 64 F
B 60 P
B 65 G
G 01 C

Le présent rapport a été établi pour toutes les revendications

| Lieu de la recherche | Date d'achèvement de la recherche | Examinateur |
|---|---|---|
| LA HAYE | 19-10-1989 | HAUGLUSTAINE H.P.M. |